# EUROPEAN PATENT APPLICATION

(11) **EP 1 742 452 A1**
(43) Date of publication of application: **10.01.2007**
(21) Application number: 06394014.2
(22) Date of filing: 03.07.2006
(51) Int. Cl.: H04M 3/436

(54) **Spam protection system for voice calls**

(30) Priority: 05.07.2005 IE 20050449
(71) Applicant: Markport Limited, Dublin 1 (IE)
(72) Inventor: Brouwer, Sander, Sleeuwijk (NL)
(74) Representative: Weldon, Michael James

(57) **Abstract**

A voice call in a connectionless VoIP domain is received (2) by a protection system which resides between a CSCF system and an IP voicemail system. A filter checks (2) the originator address against personalized address white and black lists. If on the black list (3a) session set-up is terminated (3c). If (3b) it is on the white list the session is connected (4) to the recipient. If the originator address is not on the white list a local connection is established (5). Subsequently, a detector operates (6a, 6b, 6c) to prompt the originator with an audible randomly-selected question from a database containing a number of question and answer pairs, which are identified in the database by an index number (I). The questions are stored in the database in the form of audio clips, and the answers are stored in computer readable phonetic language format. The originator is requested to respond verbally to the selected question. This filters humans from machines, as only a human will have the ability to correctly interpret and answer the question. The verbal answer provided by the originator is processed (6c) by a voice recognition sub-system to generate computer readable phonetic language format. The interpreted text-based answer is matched (7) against the answer stored in the database. This addresses the problem of machine-driven voice spam

## Description

### Field of the Invention

The invention relates to voice communication, such as VoIP communication.

### Prior Art Discussion

One of the problems faced by subscribers to voice communication services such as VoIP is that of dealing with unsolicited voice calls, particularly machine-originated voice calls.

US2004/0120478 describes a method of determining caller identification in a VoIP system. If standard caller identification information is not available the caller is prompted to provide spoken caller identification.

The invention is directed towards providing improved screening of incoming voice calls.

### SUMMARY OF THE INVENTION

According to the invention, there is provided a voice channel protection system comprising a detector for detecting a voice communication and taking an access control action in response, wherein the detector determines whether an originator is a human or a machine.

In one embodiment, the detector:
determines a question to pose to the originator, the question being of a type which can only be readily answered by a human, and determines a corresponding answer;
prompts the originator with the question; and
processes a received response to determine if it matches the corresponding answer, in which the detector determines that the originator is potentially a machine if the answer does not match.

This is a very effective mechanism for detecting machine-generated voice calls or sessions. Machines are capable of generating large volumes of "voice" messages using recorded audio clips, for purposes such as marketing.

In one embodiment, the detector accesses a database of question/answer pairs and randomly selects a pair in real time.

In one embodiment, the detector randomly selects a pair by executing a hash function on a parameter value.

In one embodiment, the parameter value is associated with real time.

In one embodiment, the question/answer pair is randomly selected from the database by dynamically executing the algorithm: I = (H(R)+D+M) mod Q, in which I is an index number which is the mathematical result of N Modulus Q, where N is the mathematical result of a hash function H on a recipient address R incremented with the day number of the year D, incremented with the minute number of the day M, and Q is the stored number of pairs in the database.

In one embodiment, the questions are stored in the database in the form of audio clips and the answers are stored in the form of computer-readable phonetic language format.

In one embodiment, the detector comprises a voice recognition sub-system for processing responses to the prompts to generate computer-readable format, and said format is compared with the answer to determine if there is a match.

In another embodiment, the system comprises a filter for filtering incoming voice sessions before the detector.

In one embodiment, the filter compares an originator address with a white list, the filter automatically connects a session if the originator address is present in the white list, and automatically routes a session to the detector if the originator address is not present on the white list.

In one embodiment, the system comprises a feedback mechanism for automatically updating the white list in response to user feedback.

In one embodiment, the filter compares an originator address with a black list and immediately terminates a session if said address is present in the black list.

In one embodiment, the system comprises a feedback mechanism for automatically updating the black list in response to user feedback.

In one embodiment, the system blocks a direct communication to an addressed recipient if there is an inadequate response to the prompt generated by the detector.

In one embodiment, the system further comprises a voicemail system for further processing downstream of the detector.

In one embodiment, the system routes a session to the voicemail system if the detector does not positively determine that the originator is a human.

In one embodiment, the voicemail system automatically generates an audio signature for an originator according to audio received from an originator, and accesses a database of audio signatures of known spam messages, and determines that a session is to be terminated if an audio signature is located in the database.

In one embodiment, the voicemail system automatically deletes a recorded message if a session is to be terminated.

In one embodiment, the voicemail system records a voice message in a mailbox if the originator is possibly authorized.

In one embodiment, the system further comprises an interface for allowing a subscriber to mark an originator as trusted or untrusted.

In one embodiment, the interface adds trusted originators to a white list and adds untrusted originators to a blacklist.

In one embodiment, an originator is identified by the system by originator address, and the interface presents recorded messages of originators to the user for selection to mark as trusted or untrusted.

In another aspect, the invention provides a voice channel protection method carried out by a protection system, the method comprising the steps of:
an interface of the system receiving a voice session from an originator,
a detector of the system automatically determining if the originator is a human or a machine,
the system implementing an action depending on the decision of the detector.

### DETAILED DESCRIPTION OF THE INVENTION

### Brief Description of the Drawings

The invention will be more clearly understood from the following description of some embodiments thereof, given by way of example only with reference to the accompanying drawings in which:-
Figs. 1 and 2 are flow diagrams illustrating operation of a protection system of the invention; and
Figs. 3 and 4 are message transfer diagrams illustrating operation of the system for two scenarios.

### Description of the Embodiments

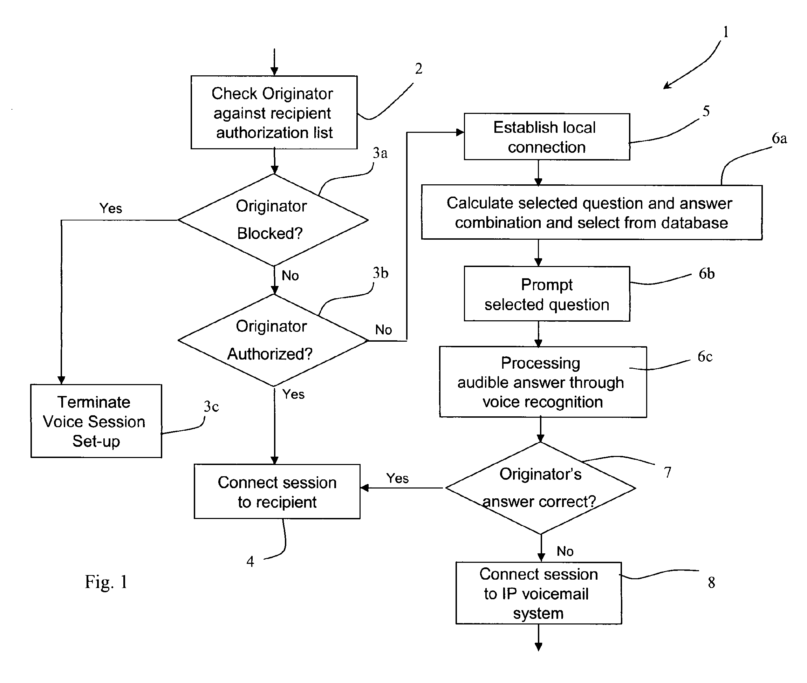

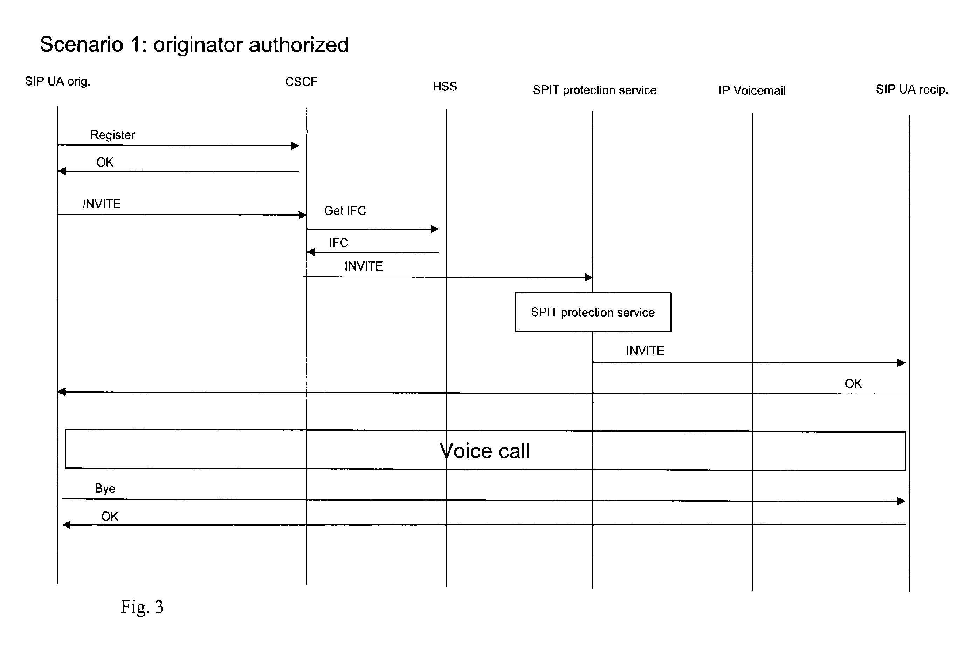

Referring to Fig. 1 in a method 1 a voice call is received by a protection system in a step 2. The "Spam Protection for Internet Telephony" ("SPIT") system resides between a CSCF system and an IP voicemail system, as shown in more detail in Fig. 3.

A filter operates in steps 2 and 3. In step 2 the originator address is checked against a personalized address white list (or "recipient authorization list") and a black list. As indicated by the decision step 3a, if on the black list the voice session set up is terminated in step 3c. According to decision step 3b, if the originator address is on the white list the call is connected in step 4. If the call is neither on the black list or on the white list a local connection is established in step 5 and a detector operates in steps 6-8.

In these steps the detector prompts the originator with an audible randomly-selected question from a database containing a number of question and answer pairs, which are identified in the database by an index number I. The questions are stored in the database in the form of phonetic audio clips, and the answers are stored in computer readable phonetic language format.

The question/answer pair is selected randomly from the database by calculating the associated index number I in step 6a, where I is the mathematical result of N Modulus Q, where N is the mathematical result of a hash function H on the recipient address R incremented with the day number of the year D, incremented with the minute number of the day M, and Q is the stored number of Questions in the database. In formula form: I = (H(R)+D+M) mod Q. The hash function is changed on a regular basis to keep the behaviour random. The above question/answer pair selection process ensures an unpredictable behaviour and that potential unauthorised or undesired originators are prompted with different questions for different recipient addresses on different times, so that it will be extremely difficult for the originator to automate responding to questions from the detector.

The originator is requested to respond verbally to the selected question identified by index number I in step 6a. This filters humans from machines, as only a human will have the ability to correctly interpret and answer the question. This addresses the problem of machine-driven voice spam, which takes the form of unsolicited audio clips being played over the voice channel when the recipient answers the phone. Subsequently, the verbal answer provided by the originator is processed by a voice recognition sub-system to generate computer interpretable text format as indicated in step 6c. The interpreted text-based answer is matched against the text-based answer stored in the database identified by index number I in step 6a. The comparison is considered a positive match in case the interpreted phonetic answer matches the phonetic text-based answer stored in the database for more than a preconfigured accuracy threshold.

If the verification is positive the session is connected to the recipient in step 4, as indicated by the decision step 7

If verification is negative, in step 8 the session is connected to an IP voicemail system. The voicemail system may be configured to automatically delete messages which are diverted to it in this manner (steps 9-11). The check performed in step 10 is to calculate an audio signature of the recorded voice message and match the audio signature against a second database containing audio signatures of known Spam audio messages. If the audio signature of the recorded message is found in the audio signature database, the recorded voice message is deleted from the voicemail system.

The voicemail system has in this embodiment a visual voice mailbox interface enabling the subscriber to easily access relevant messages. Such a visual voice mailbox uses IMAP access, enabling the VoIP subscriber to quickly access relevant voice mails that were diverted to the voice mailbox. Alternatively, it may use HTTP or Video Portal access. This interface also allows the subscriber to mark an originator of a voice mail as "trusted". When an originator is marked as "trusted", the originator address is added to the subscriber's personalized address white list. Subsequent incoming voice calls coming from the same originator will be allowed to be connected directly to the subscriber.

The visual voice mailbox access interface also allows the subscriber to "block" an originator of a voice mail. When an originator is blocked by the subscriber, the originator address is added to the subscriber's personalized address black list. Subsequent voice calls or sessions coming from the same originator address will be terminated automatically by the filter without implementing steps 5 to 7.

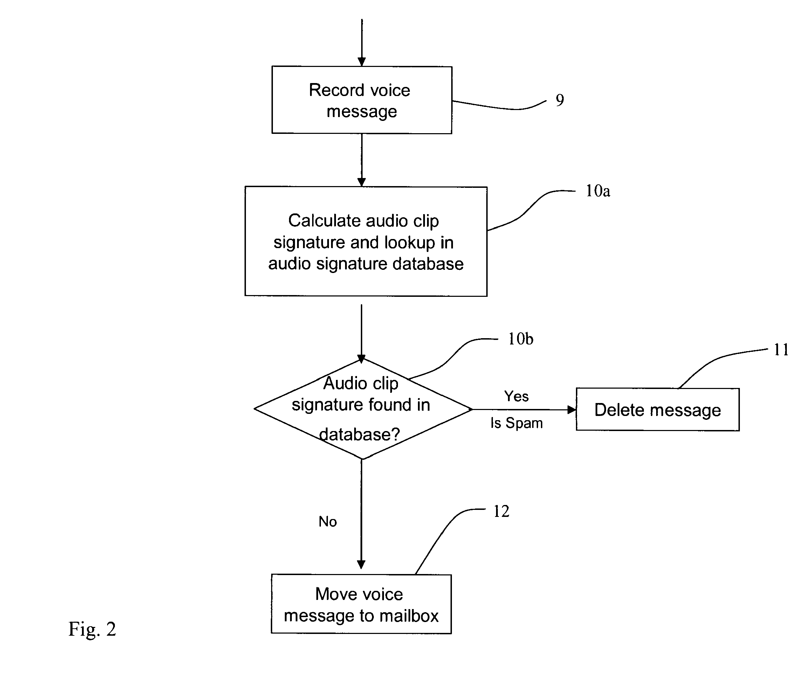

The visual voice mailbox access interface also allows the subscriber to mark a recorded voice mail as unwanted spam. When a recorded voice mail is marked by the subscriber as unwanted spam, and the message was diverted to the voice mail system because of the failed test in step 7, then the audio signature calculated in step 10a is added to the audio signature database (not shown in Fig. 2). Subsequent spam attempts with the same audio clip, regardless of the originator or the recipient will be deleted automatically in step 10b and 11 without implementing step 12.

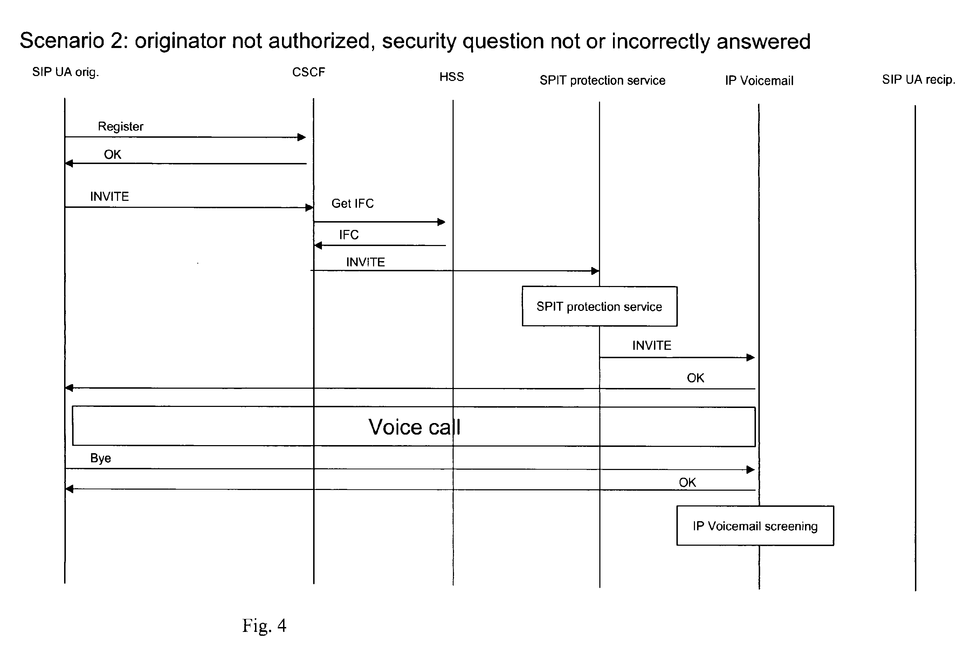

Referring to Figs. 3 and 4 message transfers for two example scenarios are shown. Initial Filter Criteria downloaded from the HSS will cause the CSCF to divert the INVITE primitive to the SPIT protection system, which will route it on if the originator is authorized.

As shown in Fig. 4 in the second scenario the originator is not authorized because the security question is not answered or is answered incorrectly. In this case the protection system routes the INVITE primitive to the IP voicemail system, which establishes a voice session between the originator and the IP voicemail system.

The invention is not limited to the embodiments described but may be varied in construction and detail. For example the algorithm to ensure an unpredictable question and answer combination for the originator may differ, or the invention may be applied to other voice channels such as conventional PSTN voice channels.

## Claims

1. A voice channel protection system comprising a detector for detecting (6a-6c) a voice communication and taking an access control action (4, 8) in response, wherein the detector determines whether an originator is a human or a machine.

2. A voice channel protection system as claimed in claim 1, wherein the detector:
determines (6a) a question to pose to the originator, the question being of a type which can only be readily answered by a human, and determines a corresponding answer;
prompts (6b) the originator with the question; and
processes (6c) a received response to determine if it matches the corresponding answer, in which the detector determines that the originator is potentially a machine if the answer does not match.

3. A voice channel protection system as claimed in claim 2, wherein the detector accesses a database of question/answer pairs and randomly selects a pair in real time.

4. A voice channel protection system as claimed in claim 3, wherein the detector randomly selects (6a) a pair by executing a hash function on a parameter value.

5. A voice channel protection system as claimed in claim 4, wherein the parameter value is associated with real time.

6. A voice channel protection system as claimed in claim 5, wherein the question/answer pair is randomly selected from the database by dynamically executing the algorithm: I = (H(R)+D+M) mod Q, in which I is an index number which is the mathematical result of N Modulus Q, where N is the mathematical result of a hash function H on a recipient address R incremented with the day number of the year D, incremented with the minute number of the day M, and Q is the stored number of pairs in the database.

7. A voice channel protection system as claimed in any of claims 2 to 6, wherein the questions are stored in the database in the form of audio clips and the answers are stored in the form of computer-readable phonetic language format.

8. A voice channel protection system as claimed in any of claims 2 to 7, wherein the detector comprises a voice recognition sub-system for processing (6c) responses to the prompts to generate computer-readable format, and said format is compared with the answer to determine if there is a match.

9. A voice channel protection system as claimed in any preceding claim, wherein the system comprises a filter for filtering (2, 3a, 3b) incoming voice sessions before the detector.

10. A voice channel protection system as claimed in claim 9, wherein the filter compares (2, 3b) an originator address with a white list, the filter automatically connects (4) a session if the originator address is present in the white list, and automatically routes (5) a session to the detector if the originator address is not present on the white list.

11. A voice channel protection system as claimed in claim 10, wherein the system comprises a feedback mechanism for automatically updating the white list in response to user feedback.

12. A voice channel protection system as claimed in any of claims 9 to 11, wherein the filter compares (2, 3a) an originator address with a black list and immediately terminates a session if said address is present in the black list.

13. A voice channel protection system as claimed in any of claim 12, wherein the system comprises a feedback mechanism for automatically updating the black list in response to user feedback.

14. A voice channel protection system as claimed in any of claims 2 to 13, wherein the system blocks (8) a direct communication to an addressed recipient if there is an inadequate response to the prompt generated by the detector.

15. A voice channel protection system as claimed in any preceding claim, further comprising a voicemail system for further processing (9-12) downstream of the detector.

16. A voice channel protection system as claimed in claim 15, wherein the system routes a session to the voicemail system if the detector does not positively determine (7) that the originator is a human.

17. A voice channel protection system as claimed in claims 15 or 16, wherein the voicemail system automatically generates (10a) an audio signature for an originator according to audio received from an originator, and accesses (10b) a database of audio signatures of known spam messages, and determines that a session is to be terminated if an audio signature is located in the database.

18. A voice channel protection system as claimed in claim 17, wherein the voicemail system automatically deletes (11) a recorded message if a session is to be terminated.

19. A voice channel protection system as claimed in any of claims 15 to 18, wherein the voicemail system records (9) a voice message in a mailbox if the originator is possibly authorized.

20. A voice channel protection system as claimed in any preceding claim, further comprising an interface for allowing a subscriber to mark an originator as trusted or untrusted.

21. A voice channel protection system as claimed in claim 20, wherein the interface adds trusted originators to a white list and adds untrusted originators to a blacklist.

22. A voice channel protection system as claimed in claims 20 or 21, wherein an originator is identified by the system by originator address, and the interface presents recorded messages of originators to the user for selection to mark as trusted or untrusted.

23. A voice channel protection method carried out by a protection system, the method comprising the steps of:
an interface of the system receiving a voice session from an originator,
a detector of the system automatically determining (6a-6c) if the originator is a human or a machine,
the system implementing (4, 8, 11, 12)an action depending on the decision of the detector.

24. A method as claimed in claim 23, wherein the detector determines if the originator is a human or a machine by:
determining (6a) a question to pose to the originator, the question being of a type which can only be readily answered by a human, and determines a corresponding answer;
prompting (6b) the originator with the question; and
processing (6c) a received response to determine if it matches the corresponding answer, in which the detector determines that the originator is possibly a machine if the answer does not match.

25. A method as claimed in claim 24, wherein the detector accesses a database of question/answer pairs and randomly selects a pair in real time.

26. A method as claimed in claim 25, wherein the detector randomly selects a pair by executing a hash function using a parameter value as an input.

27. A method as claimed in claim 26, wherein the parameter value is associated with real time.

28. A method as claimed in claim 27, wherein the question/answer pair is randomly selected from the database by dynamically executing the algorithm : I = (H(R)+D+M) mod Q, in which I is an index number which is the mathematical result of N Modulus Q, where N is the mathematical result of a hash function H on a recipient address R incremented with the day number of the year D, incremented with the minute number of the day M, and Q is the stored number of pairs in the database.

29. A method as claimed in any of claims 24 to 28, wherein the questions are stored in the database in the form of audio clips and the answers are stored in the form of computer-readable language format.

30. A computer program product comprising software code for implementing steps of a method of any of claims 23 to 29 when executing on a digital processor.
